# FASCICULE DE BREVET EUROPEEN

(11) **EP 0 967 842 B1**
(45) Date de publication et mention de la délivrance du brevet: **29.09.2004**
(21) Numéro de dépôt: 99410079.0
(22) Date de dépôt: 18.06.1999
(51) Int. Cl.: H05B 37/02, H02J 13/00, H04B 3/54

(54) **Emission d'une consigne de fonctionnement par une ligne d'alimentation alternative**
Sollwertsendung über ein Wechselstromversorgungsnetz
Setpoint signal emission on an AC network power line

(30) Priorité: 22.06.1998 FR 9808025
(43) Date de publication de la demande: 29.12.1999
(73) Titulaire: STMicroelectronics S.A., 92120 Montrouge (FR)
(72) Inventeur: Wuidart, Luc, 83910 Pourrieres (FR); Bardouillet, Michel, 13790 Rousset (FR)
(74) Mandataire: de Beaumont, Michel

(56) Documents cités:
- WO-A-80/01024
- WO-A-93/17482
- WO-A-97/06655
- FR-A- 2 114 026
- GB-A- 2 298 553

## Description

La présente invention concerne la variation de la puissance d'alimentation d'une charge alimentée à partir d'une tension approximativement continue obtenue par redressement d'une tension alternative et, plus généralement, l'émission d'une information analogique sur une ligne d'alimentation alternative d'une charge à impédance d'entrée capacitive.

Quand on souhaite faire varier la puissance d'alimentation d'une charge à impédance d'entrée capacitive, on utilise généralement un variateur par angle de phase ou par découpage d'angle de phase pour moduler la puissance transmise à la charge.

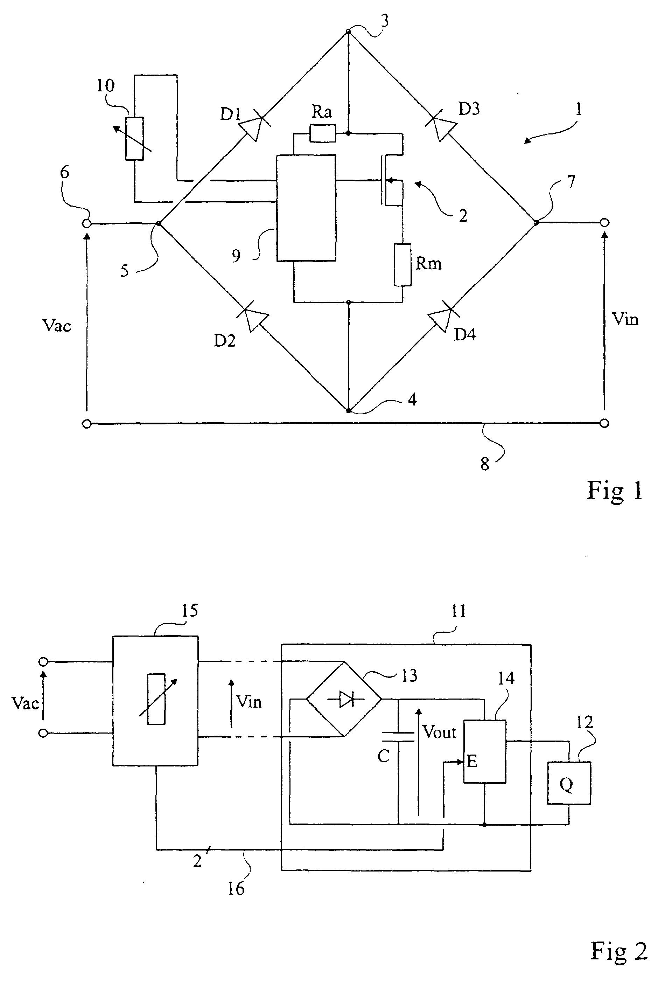

La figure 1 représente un exemple de variateur 1 par découpage d'angle de phase classique. Ce variateur 1 est basé sur l'utilisation d'un interrupteur 2 (ici, un transistor MOS) connecté en série avec une résistance de mesure Rm entre deux bornes 3 et 4 de sortie redressée d'un pont de diodes D1, D2, D3 et D4. Une première borne alternative 5 du pont est connectée à une borne 6 (par exemple, la phase) d'une alimentation alternative, par exemple, la tension du secteur Vac, tandis qu'une deuxième borne alternative 7 du pont constitue une borne de sortie délivrant une tension d'alimentation alternative Vin modifiée, destinée à la charge. L'autre ligne (neutre 8) de l'alimentation alternative n'est pas interrompue. Le transistor 2 est commandé par un convertisseur 9 (par exemple, un circuit TS555 commercialisé par la société SGS-Thomson Microelectronics) connecté entre la borne 4 et, par l'intermédiaire d'une résistance d'alimentation Ra, la borne 3. Le convertisseur 9 convertit une variation de résistance (potentiomètre 10) en un temps de conduction de l'interrupteur 2.

Le fonctionnement d'un variateur tel que représenté à la figure 1 est parfaitement connu. Le circuit 9 reçoit une consigne de réglage, par exemple d'un potentiomètre 10 qui fixe l'angle de phase de la tension Vin délivrée. À chaque alternance de la tension Vac, la tension Vin commence par suivre l'allure de la tension Vac jusqu'à ce que l'interrupteur 2 s'ouvre sous commande du convertisseur 9.

Si un variateur basé sur un tel découpage de phase se prête bien à des applications dans lesquelles la charge à alimenter est de type résistif et ne nécessite pas une alimentation à partir d'une récupération d'une tension continue, un tel variateur par angle de phase pose plusieurs problèmes dans le cas d'une charge à impédance d'entrée capacitive.

Un premier problème est que, pour que la variation d'angle de phase se traduise par une variation de la puissance de la charge, la tension approximativement continue d'alimentation de la charge doit suivre les variations de puissance liées à la variation de l'angle de phase. Or la charge est généralement alimentée par l'intermédiaire d'un circuit électronique tirant sa propre alimentation de la tension approximativement continue obtenue à partir de la tension Vin. Par exemple, dans une application à l'alimentation d'une lampe fluorescente au moyen d'un circuit électronique constituant un convertisseur à découpage, une variation de la tension approximativement continue obtenue à partir de la tension Vin nuit au fonctionnement correct du convertisseur à découpage.

De plus, un découpage dans la zone de charge d'un condensateur constitutif de l'impédance d'entrée entraîne un courant efficace important qui n'est pas souhaitable.

Indépendamment de l'impédance d'entrée de la charge, un variateur tel qu'illustré par la figure 1 présente un autre inconvénient qui est d'engendrer une dissipation importante provenant de la commutation de l'interrupteur 2 (par exemple, un transistor MOS) alors que celui-ci est traversé par le courant destiné à la charge.

Par conséquent, notamment pour des charges ayant une impédance d'entrée capacitive, on utilise classiquement d'autres moyens que la variation par angle de phase pour intervenir sur le fonctionnement de la charge.

La figure 2 représente, de façon très schématique, la connexion électrique d'un système 11 d'alimentation d'une charge 12 (Q) à partir d'une tension alternative Vin, pourvu d'un pont redresseur 13 de la tension Vin et d'un circuit 14 d'alimentation de la charge 12 à partir d'une tension approximativement continue Vout. La tension Vout est prélevée aux bornes d'un condensateur C recevant une tension alternative redressée de sortie du pont 13.

La tension Vin d'entrée du système 11 est généralement, pour une charge à impédance d'entrée capacitive telle que représentée, la tension alternative d'alimentation Vac, par exemple la tension du secteur, non modifiée. La fonction de variation de puissance est alors effectuée à partir d'une entrée analogique basse tension E du circuit 14. Le signal appliqué à la borne E sert, par exemple dans une application à une lampe fluorescente, à modifier la fréquence du courant alternatif fourni par le convertisseur à découpage 14 de manière à faire varier l'intensité lumineuse. Cette borne E de commande en gradation d'intensité lumineuse est destinée à être commandée par un variateur externe 15 fixant une tension de commande comprise généralement entre 0 et 5 volts et proportionnelle à l'intensité lumineuse souhaitée.

Un inconvénient majeur de cette solution de variation réside dans le besoin de disposer d'une liaison basse tension 16 entre le système 11 de commande de la charge 12 et un potentiomètre interrupteur mécanique (le variateur 15) généralement situé à distance. Comme l'illustre la figure 2, outre les deux conducteurs (phase et neutre) de l'alimentation alternative Vin, on doit en effet prévoir deux conducteurs (liaison 16) basse tension entre l'interrupteur 15 comprenant un gradateur et le système électronique 11 (plus particulièrement, le circuit 14) de commande de la charge 12.

Une autre solution classique, pour transmettre une consigne à un circuit 14 de commande en alimentation d'une charge, consiste à effectuer une modulation par courant porteur, c'est-à-dire à moduler le courant d'alimentation alternatif par un signal à haute fréquence transmettant la consigne (par exemple, d'intensité lumineuse). Une telle solution nécessite, côté gradateur 15, un système de modulation (non représenté) du courant porteur pour émettre la consigne et, côté système électronique 11, un démodulateur (non représenté) chargé d'extraire la consigne de puissance de l'alimentation alternative.

Une telle solution présente l'avantage d'éviter le recours à une liaison basse tension 16 supplémentaire. Toutefois, elle présente l'inconvénient d'être particulièrement complexe et coûteuse à mettre en oeuvre.

Le document GB-A-2298553 décrit un système de commande à distance dans lequel l'alimentation alternative est interrompue pendant une durée prédéterminée qui suit un passage par zéro pour transmettre une commande (en tout ou rien). L'interrupteur utilisé ne transmet pas de consigne analogique.

La présente invention vise à proposer une nouvelle solution pour transmettre une consigne à un circuit d'alimentation d'une charge qui pallie les inconvénients des solutions classiques.

L'invention vise, en particulier, à proposer une solution simple qui ne nécessite pas de liaison supplémentaire entre l'élément de commande et le circuit d'alimentation de la charge.

La présente invention vise en particulier à proposer un émetteur d'une consigne de fonctionnement par une ligne d'alimentation alternative qui n'entraîne pas de dissipation dans l'émetteur.

Plus généralement, la présente invention vise à proposer une émission d'une consigne analogique en utilisant la tension alternative comme support de transmission, sans que cette émission s'accompagne d'une dissipation thermique ni qu'il soit nécessaire de recourir à un système d'émission réception par modulation haute fréquence.

Pour atteindre ces objets, la présente invention prévoit un émetteur d'une consigne analogique sur une ligne d'alimentation alternative destinée à une charge, comportant un élément à conduction unidirectionnelle en parallèle avec un élément résistif de valeur variable fonction de la consigne analogique à transmettre.

Selon un mode de réalisation de la présente invention, l'élément résistif et sa plage de variation en valeur sont choisis pour minimiser la dissipation d'énergie lorsqu'il est traversé par un courant.

Selon un mode de réalisation de la présente invention, l'élément à conduction unidirectionnelle est constitué d'une diode.

Selon un mode de réalisation de la présente invention, l'élément résistif de valeur variable est constitué d'un potentiomètre.

Selon un mode de réalisation de la présente invention, l'élément résistif de valeur variable est constitué d'un transistor MOS, la diode étant alors, de préférence, constituée par la diode intrinsèque du transistor MOS.

La présente invention prévoit en outre, un procédé de transmission d'une information sur une ligne d'alimentation alternative d'un circuit d'alimentation d'une charge à impédance d'entrée capacitive, comprenant un condensateur propre à fournir une tension approximativement continue Vout, et qui consiste :
côté émetteur, à faire varier l'amplitude crête de la tension alternative une alternance sur deux ; et
côté récepteur, à dimensionner le condensateur de manière à ce qu'il supporte une alimentation monoalternance et à extraire, de la tension alternative, une information proportionnelle à la variation d'amplitude.

Ces objets, caractéristiques et avantages, ainsi que d'autres de la présente invention seront exposés en détail dans la description suivante de modes de réalisation particuliers faite à titre non-limitatif en relation avec les figures jointes parmi lesquelles :
les figures 1 et 2 qui ont été décrites précédemment sont destinées à exposer l'état de la technique et le problème posé ;
la figure 3 représente un premier mode de réalisation d'un émetteur d'une consigne analogique selon la présente invention ;
les figures 4A et 4B illustrent, sous forme de chronogrammes, le fonctionnement d'un émetteur tel que représenté en figure 3 ;
la figure 5 représente un premier mode de réalisation d'un circuit d'alimentation d'une charge à partir d'une tension approximativement continue obtenue par redressement d'une tension alternative, propre à être associé à un émetteur selon la présente invention ;
les figures 6A, 6B et 6C illustrent, sous forme de chronogrammes, le fonctionnement du circuit de la figure 5 en utilisant un émetteur tel que représenté en figure 3 ;
la figure 7 présente un deuxième mode de réalisation d'un émetteur d'une consigne analogique selon la présente invention ; et
la figure 8 représente un deuxième mode de réalisation d'un circuit récepteur selon la présente invention.

Les mêmes éléments ont été désignés par les mêmes références aux différentes figures. Pour des raisons de clarté, seuls les éléments qui sont nécessaires à la compréhension de l'invention ont été représentés aux figures et seront décrits par la suite.

Une caractéristique de la présente invention est d'utiliser une alternance sur deux de l'alimentation alternative pour transmettre la puissance nécessaire à l'alimentation de la charge et l'autre alternance pour transmettre une information analogique aux circuits alimentant cette charge à partir d'une tension approximativement continue obtenue par redressement de la tension alternative. Ainsi, selon la présente invention, le circuit d'alimentation de la charge utilise une tension alternative monoalternance et la transmission de l'information analogique s'effectue donc sans modifier la tension approximativement continue utilisée par ce circuit d'alimentation de la charge. Selon l'invention, la consigne analogique peut alors être transmise en faisant varier l'amplitude crête de la tension alternative pendant l'alternance utilisée à des fins de transmission, cette variation étant fonction de la consigne à transmettre.

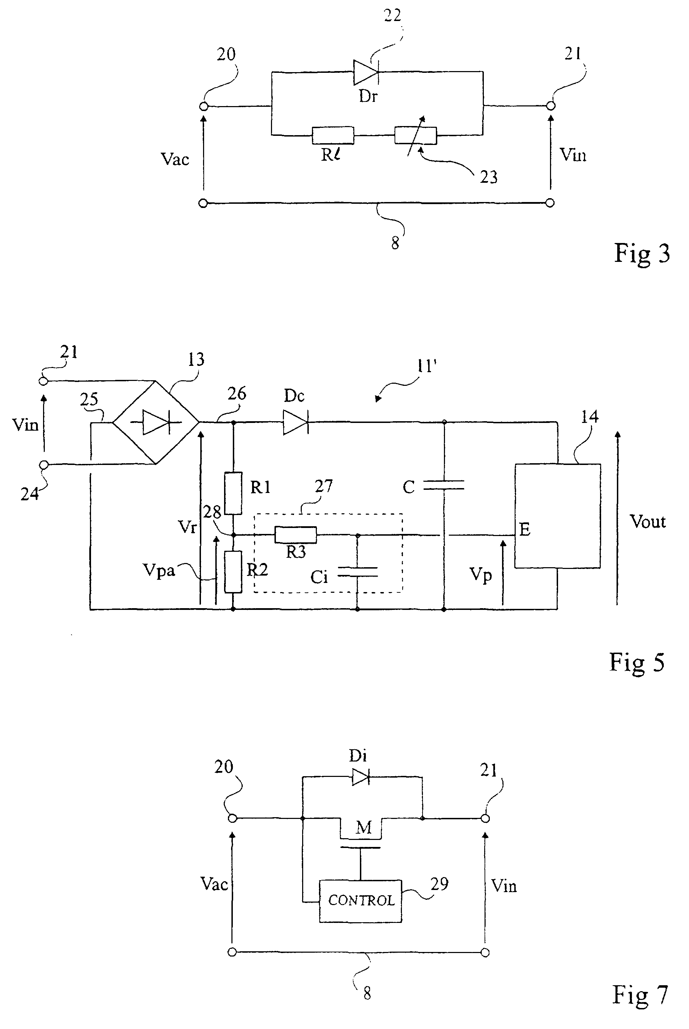

La figure 3 représente un premier mode de réalisation d'un émetteur d'une consigne analogique destiné à un circuit d'alimentation d'une charge à impédance d'entrée capacitive selon la présente invention.

Cet émetteur comporte, en parallèle entre deux bornes d'entrée 20 et de sortie 21, un élément 22 à conduction unidirectionnelle (par exemple, une diode Dr) et un élément résistif 23 de valeur variable, par exemple un potentiomètre. Dans l'exemple représenté à la figure 3, le potentiomètre 23 est associé en série avec une résistance de limitation Rℓ. Selon l'invention, la valeur de l'élément résistif est fonction de la consigne à transmettre et conditionne donc l'amplitude crête de la tension des alternances dédiées à la transmission.

Un émetteur selon l'invention est destiné à être connecté en série sur une ligne d'alimentation alternative. Par exemple, la borne 20 est connectée à une première borne d'application d'une tension alternative Vac, par exemple la phase du secteur. La tension Vin destinée au circuit d'alimentation de la charge est alors prélevée entre la borne 21 de sortie de l'émetteur et le neutre 8 non interrompu de l'alimentation alternative.

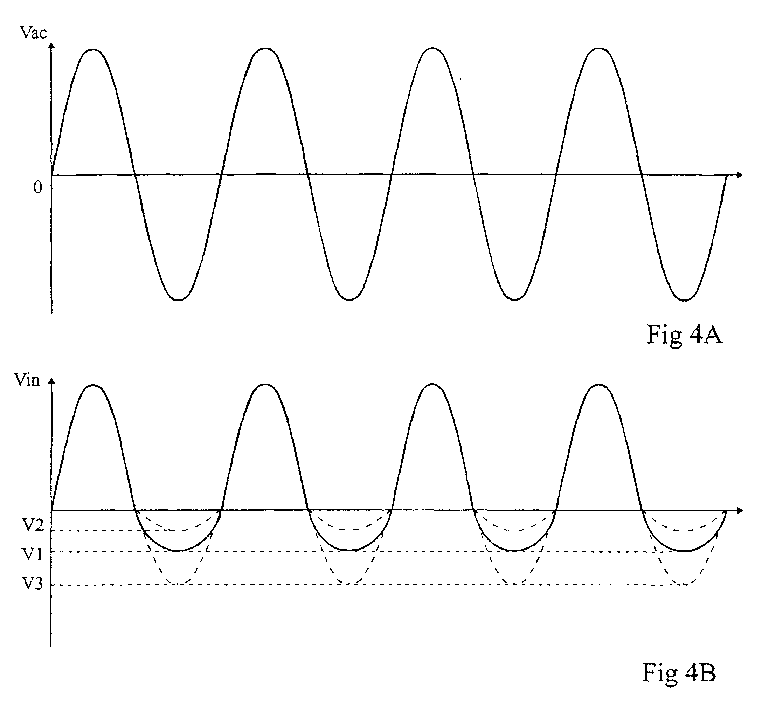

Le fonctionnement de l'émetteur représenté à la figure 3 est illustré par les figures 4A et 4B qui représentent, sous forme de chronogrammes, un exemple d'allures des tensions Vac et Vin.

Dans l'exemple représenté aux figures 4A et 4B, la diode Dr laisse passer les alternances positives et est bloquée pendant les alternances négatives de la tension Vac. On notera toutefois qu'un fonctionnement parfaitement symétrique est obtenu en inversant les connexions de la diode Dr dans le montage de la figure 3 pour qu'elle soit conductrice pendant les alternances négatives et bloquée pendant les alternances positives.

Pendant les alternances négatives, la tension Vin est atténuée par rapport à la tension alternative Vac de la chute de tension dans l'élément résistif constitué de la résistance Rℓ et du potentiomètre 23 avec une résistance liée au récepteur qui sera décrit par la suite. Selon la valeur du potentiomètre 23, cette atténuation est plus ou moins importante. À la figure 4B, on a illustré trois réglages différents du potentiomètre 23, un réglage médian étant illustré en traits pleins et fournissant une valeur crête négative V1 tandis que deux réglages extrêmes sont illustrés en pointillés et fournissent respectivement des valeurs crêtes négatives V2 et V3.

On notera que, quel que soit le réglage du potentiomètre 23, la forme d'onde des alternances positives de la tension de sortie Vin n'est pas modifiée.

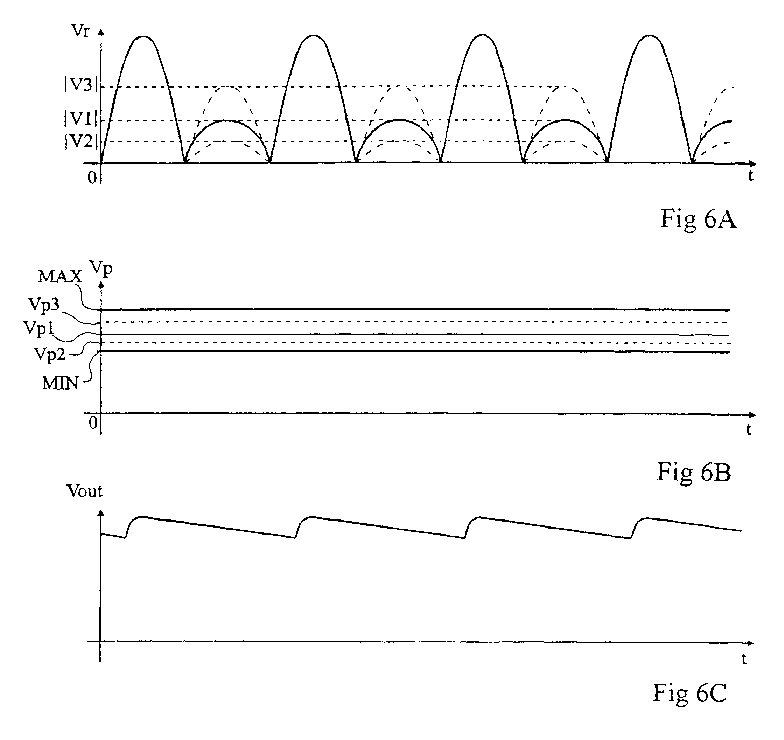

La figure 5 représente un premier mode de réalisation d'un circuit 11' d'alimentation d'une charge (non représentée) à impédance d'entrée capacitive, adaptée pour l'exploitation des informations analogiques transmises par un émetteur selon l'invention.

Ce circuit comporte, de façon classique (figure 2), un pont 13 de diodes dont deux bornes d'entrée sont connectées à deux bornes 21, 24 d'application de la tension alternative Vin délivrée par un émetteur selon l'invention, par exemple tel qu'illustré par la figure 3.

Une première borne 25 de sortie du pont 13 constitue une borne de potentiel de référence du circuit 11'. Une deuxième borne 26 de sortie redressée du pont 13 a, comme dans un circuit classique, pour objet de délivrer à l'aide d'un condensateur C une alimentation approximativement continue Vout à un circuit 14 servant à alimenter une charge (non représentée).

Une caractéristique d'un récepteur propre à fonctionner avec un émetteur de la présente invention est qu'il comporte des moyens pour préserver une tension Vout sensiblement continue aux bornes du condensateur C, indépendamment des variations imposées par l'émetteur (figure 3) sur la tension Vin d'entrée du pont 13.

Dans l'exemple représenté par la figure 5, le récepteur comprend une diode Dc en série avec le condensateur C entre les bornes 26 et 25 de sortie redressée du pont 13, l'anode de la diode Dc étant connectée à la borne 26 et la tension approximativement continue Vout restant prélevée aux bornes du condensateur C.

Le rôle de la diode Dc, ou d'un élément à conduction unidirectionnelle analogue, est d'autoriser un prélèvement de la tension alternative redressée Vr, avant que celle-ci soit filtrée par le condensateur C. Cela est, selon l'invention, indispensable pour extraire de la tension alternative Vin fournie par l'émetteur, l'information analogique véhiculée par les alternances négatives.

Dans ce mode de réalisation, la tension Vr de sortie du pont 13, prélevée entre les bornes 26 et 25, est appliquée à deux extrémités d'un pont diviseur de tension constitué de deux résistances R1, R2 associées en série. Ce pont diviseur est destiné à extraire, de la tension alternative redressée Vr, une basse tension Vpa qui est fonction du niveau imposé par l'émetteur lors des alternances négatives. Le dimensionnement du pont diviseur résistif R1-R2 est bien entendu fonction de l'amplitude de la tension alternative d'alimentation Vac, de l'amplitude souhaitée pour la basse tension analogique Vpa destinée au circuit 14 d'alimentation de la charge et du dimensionnement du potentiomètre 23 et de sa résistance de limitation Rℓ qui participent au rapport entre les tensions Vpa et Vac. Dans l'exemple représenté à la figure 5, un circuit intégrateur 27 est intercalé entre le point milieu 28 de l'association en série des résistances R1 et R2 et la borne E du circuit 14 recevant la tension de consigne Vp. Le rôle de cet intégrateur (constitué par exemple d'une résistance R3 et d'un condensateur Ci) est, comme on le verra par la suite en relation avec la figure 6B, de convertir les variations de la tension alternative Vpa en niveaux de tension continue.

On notera que tout autre moyen équivalent à un abaisseur de tension pourra être utilisé à la place du pont diviseur résistif. Toutefois, l'utilisation de résistances constitue un mode de réalisation préféré eu égard à la simplicité de ce mode de réalisation. De même, tout autre moyen à conduction unidirectionnelle pourra être utilisé à la place de la diode Dc qui constitue cependant un mode de réalisation préféré en raison de sa simplicité.

Le fonctionnement d'un récepteur tel que représenté en figure 5 est illustré par les figures 6A à 6C, qui représentent sous forme de chronogrammes, un exemple d'allures des tensions Vr, Vp et Vout pour une tension Vin telle qu'illustrée par la figure 4B.

A la figure 6A, on a repris, sur la tension Vr, les trois exemples de consignes fixés par l'émetteur sur les alternances négatives de la tension Vin. Les niveaux de tension fixés pour ces alternances négatives se retrouvent, sur la tension Vp, sous la forme de niveaux continus, en raison de l'intégration opérée par la cellule 27. On se trouve donc en présence d'un niveau de tension Vp1, Vp2 ou Vp3 qui est directement proportionnel à l'amplitude V1, V2, V3 des alternances négatives fixée par l'émetteur (figure 3). Les variations de la tension Vp en fonction des variations de la tension Vin sont limitées entre deux niveaux extrêmes MAX et MIN. Le niveau minimal (MIN) correspond à une absence de tension Vin lors des alternances négatives et donc à l'intégration des seules alternances positives de la tension Vac. Le niveau maximal (MAX) correspond à une tension Vin pour laquelle le potentiomètre 23 est dans sa position de résistance minimale.

On notera que, côté récepteur, le condensateur C est dimensionné de sorte à pouvoir accumuler une énergie suffisante pour lui permettre de n'être rechargé qu'une alternance sur deux. Ainsi, la tension Vout (figure 6C) est maintenue à un niveau sensiblement continu bien que la tension Vr subisse des variations dans ses alternances négatives.

De préférence, les résistances R1, R2, Rℓ et la résistance du potentiomètre 23 sont choisies avec des valeurs suffisamment élevées pour minimiser la dissipation dans la résistance Rℓ et dans le potentiomètre 23, c'est-à-dire côté émetteur, pendant les alternances négatives.

Un avantage de la présente invention est qu'elle permet d'obtenir un variateur de tension qui n'entraîne qu'une très faible dissipation d'énergie. En effet, non seulement aucun élément résistif n'est traversé par un courant, côté émetteur, lors des alternances négatives mais, de plus, on peut dimensionner les résistances pour qu'elles minimisent la dissipation lors des alternances négatives (par exemple, à une valeur de moins d'1 Watt). Ainsi, un émetteur selon l'invention peut désormais être, par exemple, logé dans un boîtier mural pour constituer un variateur de tension sans que cet encastrement pose des problèmes d'évacuation de chaleur.

Un autre avantage de la présente invention est que l'émetteur est de constitution particulièrement simple, en particulier, par rapport à un variateur classique tel qu'illustré par la figure 1.

Un autre avantage de la présente invention est qu'elle permet d'obtenir la transmission de toute consigne analogique, sans nuire à l'alimentation de la charge. De plus, un émetteur de la présente invention tel que représenté à la figure 3 s'intercale en série sur une des lignes d'alimentation alternative (par exemple, la phase) ce qui facilite son installation. Il s'agit donc d'un variateur à deux bornes.

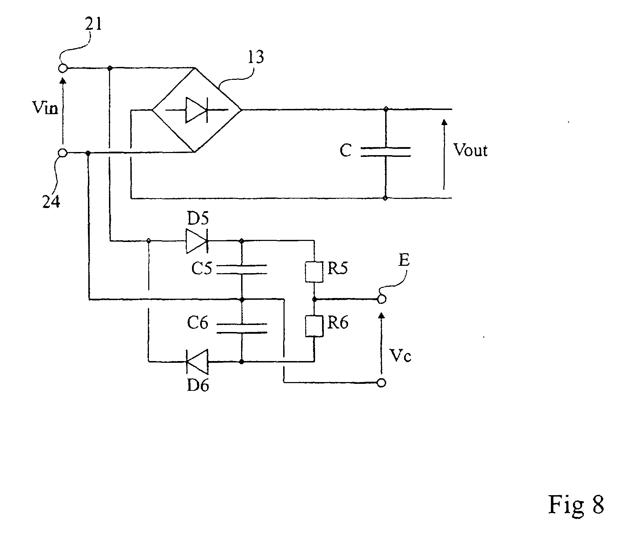

La figure 7 représente un deuxième mode de réalisation d'un émetteur d'une consigne analogique selon la présente invention. Selon ce mode de réalisation, l'émetteur est constitué d'un transistor MOS M placé en série entre les bornes 20 et 21 et d'une diode Di en parallèle avec le transistor M. Le transistor M est commandé par un bloc 29 (CONTROL) dont une borne d'entrée est reliée à la borne 20 et dont une borne de sortie est reliée à la grille du transistor MOS M.

Le bloc 29 est destiné à fournir une tension adaptée à la commande du transistor M en fonction d'une consigne. La réalisation d'un tel bloc 29 est à la portée de l'homme du métier à partir des indications fonctionnelles ci-dessus. Le cas échéant, une connexion au neutre 8 peut être prévue selon les moyens utilisés.

Dans ce mode de réalisation, on utilisera un transistor MOS de faible puissance dans la mesure où celui-ci ne sera que traversé par un faible courant lors des alternances négatives, la diode Di servant au passage du courant lors des alternances positives. Par conséquent, même pour un circuit destiné à être alimenté par une tension alternative élevée (par exemple la tension secteur de 220 volts), on pourra utiliser un transistor MOS qui, bien que haute tension, soit de faible puissance.

On notera que, dans le cas d'un montage tel qu'illustré par la figure 7, la diode Di peut être constituée par la diode parasite interne du transistor MOS, ce qui simplifie encore la constitution de l'émetteur.

La figure 8 représente un deuxième exemple d'un récepteur propre à être associé avec un émetteur selon l'invention pour exploiter une consigne analogique véhiculée par une alternance sur deux de la tension alternative d'alimentation.

Dans l'exemple de la figure 8, la tension de consigne est prélevée en amont du pont redresseur 13, chargé de redresser la tension Vin pour charger le condensateur C d'alimentation de la charge à partir d'une tension Vout sensiblement continue. Par souci de simplification, le circuit de commande de la charge et cette dernière n'ont pas été représentés à la figure 8.

Comme précédemment, le condensateur C aux bornes duquel est prélevée la tension Vout est dimensionné en fonction de la charge, pour pouvoir accumuler une énergie suffisante dans un fonctionnement monoalternance de sorte que la variation de tension lors des alternances, par exemple négatives, ne nuit pas au fonctionnement de la charge.

Dans l'exemple représenté à la figure 8, la récupération de la consigne analogique s'effectue en amont du pont 13. La borne 21 est reliée à l'anode d'une première diode D5 dont la cathode est connectée, par l'intermédiaire d'une résistance R5, à la borne E. Une deuxième diode D6 est reliée, par sa cathode, à la borne 21, son anode étant reliée, par l'intermédiaire d'une résistance R6 à la borne E. Deux condensateurs d'écrêtage, C5, C6 sont respectivement connectés entre la borne 24 et le point milieu des associations en série respectives des diodes D5, D6 avec les résistances R5, R6.

La tension de commande Vc prélevée au point milieu de l'association en série des résistances R5 et R6 correspond à la tension Vin atténuée du rapport entre les résistances R5 et R6 qui sont, de préférence, de même valeur. Les condensateurs C5 et C6 servent de filtrage de crête des alternances positives et négatives de la tension alternative Vin. La tension Vc peut par la suite être exploitée par un circuit adapté, par exemple, par un circuit de comparaison des valeurs crêtes respectives des alternances positives et négatives qui fournit alors une indication directement proportionnelle à la consigne donnée par l'émetteur.

Le choix du récepteur de la consigne analogique dépend de l'application. Le recours à un mode de réalisation tel qu'illustré par la figure 8 sera, par exemple, privilégié lorsque l'on ne peut pas intervenir sur la structure du circuit (pont de redressement et condensateur C) de fourniture de la tension Vout pour insérer la diode Dc (figure 5).

Les applications d'un émetteur de consigne analogique de la présente invention sont multiples.

Parmi ces applications, on citera à titre d'exemple, l'application à un récepteur constitué d'un circuit de commande d'une lampe fluorescente, l'émetteur servant alors à faire varier l'intensité lumineuse dans la lampe. Un tel circuit de commande d'une lampe fluorescente est généralement constitué d'un pont et d'un condensateur destiné à fournir, par exemple pour une tension alternative Vin de 220 volts, une alimentation continue de 300 volts à un convertisseur à découpage de type "demi-pont symétrique". Ce convertisseur fournit un courant alternatif à une fréquence élevée (généralement d'environ 30 kHz) à une lampe fluorescente par l'intermédiaire d'une inductance haute fréquence. Le convertisseur est généralement constitué d'un circuit de commande associé à deux interrupteurs (par exemple, deux transistors MOS de puissance) connectés en série aux bornes du condensateur fournissant la tension sensiblement continue. Le point milieu de l'association en série des transistors de puissance est relié à une première borne de l'inductance haute fréquence montée en série avec un premier filament de la lampe fluorescente. Un condensateur de faible valeur relie généralement ce premier filament à un deuxième filament de la lampe fluorescente et participe à l'amorçage de celle-ci. Le circuit de commande des transistors de puissance est, par exemple, un circuit intégré connu sous la dénomination L6574 et fabriqué par la société SGS-Thomson Microelectronics. Dans un tel circuit, la fonction de gradation de l'intensité lumineuse de la lampe est effectuée à partir d'une entrée analogique basse tension recevant, en mettant en oeuvre la présente invention, la tension de consigne Vp (figure 5).

Dans une telle application, le recours à un système selon l'invention présente de multiples avantages.

Tout d'abord, il est désormais possible de disposer d'une fonction de gradation d'intensité lumineuse sans nécessiter de fils basse tension supplémentaires entre un interrupteur et la lampe. De plus, l'émetteur de la consigne d'intensité lumineuse est d'un encombrement particulièrement faible, ce qui facilite son implantation dans un interrupteur.

Bien entendu, la présente invention est susceptible de diverses variantes et modifications qui apparaîtront à l'homme de l'art. En particulier, le dimensionnement des différents composants du système de l'invention sera adapté en fonction de l'application, et, en particulier, en fonction de la tension d'alimentation et de la plage d'excursion souhaitée pour la basse tension de consigne. De plus, d'autres récepteurs que ceux pris pour exemple pourront être utilisés pourvu qu'ils respectent les fonctionnalités décrites et qu'ils permettent, en particulier, de préserver une tension sensiblement continue pour alimenter la charge en n'utilisant qu'une alternance sur deux de la tension alternative. En outre, on pourra apporter d'autres variantes aux modes de réalisation décrits pour l'émetteur d'une consigne analogique de l'invention, pourvu de respecter la caractéristique d'association en parallèle d'un élément à conduction unidirectionnelle faiblement dissipatif avec un élément résistif de valeur variable.

## Revendications

1. Émetteur d'une consigne analogique sur une ligne d'alimentation alternative destinée à une charge à impédance d'entrée capacitive, **caractérisé en ce qu'**il comporte un élément à conduction unidirectionnelle (Dr, Di) en parallèle avec un élément résistif (23, M) de valeur variable fonction de la consigne analogique à transmettre.

2. Émetteur selon la revendication 1, **caractérisé en ce que** l'élément résistif et sa plage de variation en valeur sont choisis pour minimiser la dissipation d'énergie lorsqu'il est traversé par un courant.

3. Émetteur selon la revendication 1 ou 2, **caractérisé en ce que** l'élément à conduction unidirectionnelle est constitué d'une diode (Dr, Di).

4. Émetteur selon la revendication 3, **caractérisé en ce que** l'élément résistif de valeur variable est constitué d'un potentiomètre (23).

5. Émetteur selon la revendication 3, **caractérisé en ce que** l'élément résistif de valeur variable est constitué d'un transistor MOS (M), la diode étant alors, de préférence, constituée par la diode intrinsèque (Di) du transistor MOS.

6. Procédé de transmission d'une information sur une ligne d'alimentation alternative d'un circuit d'alimentation d'une charge à impédance d'entrée capacitive, comprenant un condensateur (C) propre à fournir une tension approximativement continue Vout, **caractérisé en ce qu'**il consiste :
côté émetteur, à faire varier l'amplitude crête de la tension alternative une alternance sur deux ; et
côté récepteur, à dimensionner le condensateur de manière à ce qu'il supporte une alimentation monoalternance et à extraire, de la tension alternative, une information proportionnelle à la variation d'amplitude.

## Patentansprüche

1. Sender für einen analogen Befehl über eine Wechselstrom-Versorgungsleitung für eine Last mit kapazitiver Eingangsimpedanz, **dadurch gekennzeichnet, dass** er ein unidirektional leitendes Element (Dr, Di) parallel mit einem Widerstandselement (23, M) mit einem als Funktion des zu übertragenden analogen Befehles variablen Wert aufweist.

2. Sender nach Anspruch 1, **dadurch gekennzeichnet, dass** das Widerstandselement und sein Variationsbereich des Wertes gewählt sind, um den Verlust von Energie zu minimieren, wenn es von einem Strom durchflossen wird.

3. Sender nach Anspruch 1 oder 2, **dadurch gekennzeichnet, dass** das unidirektional leitende Element aus einer Diode (Dr, Di) besteht.

4. Sender nach Anspruch 3, **dadurch gekennzeichnet, dass** das Widerstandselement mit variablem Wert aus einem Potentiometer (23) besteht.

5. Sender nach Anspruch 3, **dadurch gekennzeichnet, dass** das Widerstandselement mit variablem Wert aus einem MOS-Transistor (M) besteht, wobei die Diode bevorzugt durch eine intrinsische Diode (Di) des MOS-Transistors gebildet ist.

6. Verfahren zum Senden einer Information über eine Wechselstrom-Versorgungsleitung einer Versorgungsschaltung für eine Last mit kapazitiver Eingangsimpedanz, mit einem Kondensator (C), der näherungsweise eine Gleichspannung Vout liefert, **dadurch gekennzeichnet, dass**:
auf der Senderseite die Spitzenamplitude der Wechselspannung in zwei Halbwellen variiert wird; und
auf der Empfängerseite der Kondensator derart dimensioniert wird, dass er eine Versorgung mit einer einzigen Halbwelle unterstützt, und dass aus der Wechselspannung eine Information proportional der Variation der Amplitude abgeleitet wird.

## Claims

1. A transmitter of an analog order over an A.C. supply line for a load having a capacitive input impedance, **characterized in that** it includes a one-way conduction element (Dr, Di) in parallel with a resistive element (23, M) of variable value, as a function of the analog order to be transmitted.

2. The transmitter of claim 1, **characterized in that** the resistive element and its value variation range are chosen to minimize the energy dissipation when conducting a current.

3. The transmitter of claim 1 or 2, **characterized in that** the one-way conduction element is formed of a diode (Dr, Di).

4. The transmitter of claim 3, **characterized in that** the resistive element of variable value is formed of a potentiometer (23).

5. The transmitter of claim 3, **characterized in that** the resistive element of variable value is formed of a MOS transistor (M), the diode then being, preferably, formed by the intrinsic diode (Di) of the MOS transistor.

6. A method for transmitting information over an A.C. supply line for a supply circuit of a load having a capacitive input impedance including a capacitor (C) adapted to provide an approximate D.C. voltage Vout, **characterized in that** it consists of:
on the transmitter side, of varying the peak amplitude of the A.C. voltage every other half-wave ; and
on the receiver side, of sizing the capacitor so that it can withstand a single-halfwave supply and of extracting from the A.C. voltage an information proportional to the amplitude variation.
